(19) **Europäisches Patentamt / European Patent Office / Office européen des brevets**

(11) **EP 4 654 547 A1**

(12) **EUROPEAN PATENT APPLICATION**
published in accordance with Art. 153(4) EPC

(43) Date of publication:
26.11.2025 Bulletin 2025/48

(21) Application number: 23922445.4

(22) Date of filing: 30.11.2023

(51) International Patent Classification (IPC):
*H04L 41/16* (2022.01)    *H04W 16/22* (2009.01)
*H04W 24/02* (2009.01)    *H04L 9/40* (2022.01)
*G06N 20/00* (2019.01)

(52) Cooperative Patent Classification (CPC):
H04L 63/10; G06N 3/04; G06N 3/08; G06N 20/00;
H04L 41/16; H04W 16/22; H04W 24/02

(86) International application number:
PCT/CN2023/135606

(87) International publication number:
WO 2024/169329 (22.08.2024 Gazette 2024/34)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 14.02.2023  CN 202310138276

(71) Applicant: Huawei Technologies Co., Ltd.
Shenzhen, Guangdong 518129 (CN)

(72) Inventors:
• GENG, Tingting
  Shenzhen, Guangdong 518129 (CN)
• ZENG, Yu
  Shenzhen, Guangdong 518129 (CN)

(74) Representative: Pfenning, Meinig & Partner mbB
Patent- und Rechtsanwälte
Theresienhöhe 11a
80339 München (DE)

(54) **COMMUNICATION METHOD, COMMUNICATION APPARATUS AND COMMUNICATION SYSTEM**

(57)    This application provides a communication method, a communication apparatus, and a communication system. In the method, a first network device sends a request message to a model management network element, where the request message is used for requesting to register a first model with the model management network element, and the first model is an AI model; and the first network device receives configuration limitation information of the first model from the model management network element, where the configuration limitation information indicates a network device that is allowed to be configured with the first model. In this solution, configuration limitation information of a model is introduced, so that a privacy requirement on model configuration or model use can be met. This helps improve security of the model.

FIG. 3

**Description**

CROSS-REFERENCE TO RELATED APPLICATIONS

This application claims priority to Chinese Patent Application No. 202310138276.5, filed with the China National Intellectual Property Administration on February 14, 2023 and entitled "COMMUNICATION METHOD, COMMUNICATION APPARATUS, AND COMMUNICATION SYSTEM", which is incorporated herein by reference in its entirety.

TECHNICAL FIELD

This application relates to the field of wireless communication technologies, and in particular, to a communication method, a communication apparatus, and a communication system.

BACKGROUND

Artificial intelligence (artificial intelligence, AI) is a technology in which complex computing is performed by simulating a human brain. With the improvement of data storage and computing capabilities, AI is applied in more fields. The 3rd generation partnership project (3rd generation partnership project, 3GPP) proposes to apply AI to a wireless communication system, including a terminal device, a network device, and another device. During life cycle management (life cycle management, LCM) of an AI function, an AI model may be trained and/or optimized by intelligently collecting and analyzing data, thereby improving accuracy and a computing speed of AI model inference, and improving network performance and user experience.

Before AI model deployment, the life cycle management may further include a model registration procedure. A model obtained through model training is registered with a model management network element for management of a subsequent model operation. The model operation may include at least one of the following operation manners: model transmission, model deployment, model configuration, model activation/deactivation, or another model operation.

Due to a problem of model privacy, consideration is needed for a limitation mechanism for model configuration after model registration. However, no corresponding solution is available currently.

SUMMARY

This application provides a communication method, a communication apparatus, and a communication system, to protect privacy of a model.

According to a first aspect, an embodiment of this application provides a communication method. The method may be performed by a first network device or an apparatus, for example, a chip, used in the first network device. The method includes: sending a request message to a model management network element, where the request message is used for requesting to register a first model with the model management network element, and the first model is an AI model; and receiving configuration limitation information of the first model from the model management network element, where the configuration limitation information indicates a network device that is allowed to be configured with the first model.

In the foregoing solution, configuration limitation information of a model is introduced, so that a privacy requirement on model configuration or model use can be met. This helps improve security of the model.

In a possible implementation method, the method further includes: receiving model identification information of the first model from the model management network element, where the model identification information identifies the first model.

In the foregoing solution, the first model is identified by the model identification information. This helps accurately manage the first model.

In a possible implementation method, the method further includes: sending model information of the first model to a terminal device, where the model information includes the model identification information and model management information of the first model.

In the foregoing solution, the model information of the first model is sent to the terminal device, so that the terminal device can correctly deploy the first model.

In a possible implementation method, the request message includes the model management information.

In the foregoing solution, the model management information of the first model is sent to the model management network element based on the request message, to implement registration of the first model. This helps the model management network element correctly manage the first model.

In a possible implementation method, the model management information includes model running information of the first model and/or model feature information of the first model.

In a possible implementation method, the model identification information includes identifier information of the first model and/or identifier information of a model function of the first model.

In a possible implementation method, the method further includes: sending the configuration limitation information to the terminal device.

In the foregoing solution, the configuration limitation information of the first model is sent to the terminal device, so that the terminal device can accurately determine, based on the configuration limitation information, the network device that is allowed to be configured with the first model. This helps protect privacy of the first model.

In a possible implementation method, the request message further includes first indication information, and the first indication information indicates that the first model has a use range.

In the foregoing solution, the first network device sends, to the model management network element, the first indication information indicating that the first model has the use range, so as to trigger the model management network element to determine the configuration limitation information of the first model. This helps protect the privacy of the first model.

In a possible implementation method, the first indication information indicates that a network device that is from a same manufacturer as the first network device is allowed to be configured with the first model. Alternatively, the first indication information indicates that a network device that corresponds to a same network identifier as the first network device is allowed to be configured with the first model.

In the foregoing solution, the first indication information indicates a network device that is recommended by the first network device to be configured with the first model. This helps the model management network element determine proper configuration limitation information based on the first indication information, thereby better protecting the privacy of the first model.

In a possible implementation method, the method further includes: sending a handover request message to a second network device. When the network device indicated by the configuration limitation information includes the second network device and the first model is not deployed on the second network device, the handover request message includes the model information of the first model, and the model information includes the model management information of the first model and the model identification information of the first model.

In the foregoing solution, whether the second network device is allowed to be configured with the first model is determined based on the configuration limitation information of the first model. This helps protect the privacy of the first model.

In a possible implementation method, the handover request message further includes second indication information, where the second indication information indicates that the terminal device has been configured with the first model and/or indicates a status of the first model, and the status is an activated state or a deactivated state; or the second indication information indicates that the terminal device is not configured with the first model.

In the foregoing solution, the first network device notifies the second network device of a deployment status of the first model on the terminal device. This helps the second network device correctly manage deployment of the first model on the terminal device.

In a possible implementation method, before sending the handover request message to the second network device, the method further includes: determining that the second network device is not configured with the first model.

In a possible implementation method, a handover response message is received from the second network device, where the handover response message includes third indication information, the third indication information indicates a status that is after the terminal device is handed over to the second network device and that is of the first model that has been configured for the terminal device, and the status is an activated state or a deactivated state; and a handover command message is sent to the terminal device, where the handover command message includes the third indication information.

In the foregoing solution, the second network device indicates, to the terminal device, the status of the first model that is deployed on the terminal device, so that the terminal device can correctly use the first model.

In a possible implementation method, the configuration limitation information includes information about at least one network device and/or identifier information of at least one area, the at least one network device is allowed to be configured with the first model, and a network device corresponding to the at least one area is allowed to be configured with the first model.

According to a second aspect, an embodiment of this application provides a communication method. The method may be performed by a model management network element or an apparatus, for example, a chip, used in the model management network element. The method includes: receiving a request message from a first network device, where the request message is used for requesting to register a first model with the model management network element, and the first model is an AI model; and sending configuration limitation information of the first model to the first network device, where the configuration limitation information indicates a network device that is allowed to be configured with the first model.

In the foregoing solution, configuration limitation information of a model is introduced, so that a privacy requirement on model configuration or model use can be met. This helps improve security of the model.

In a possible implementation method, the method further includes: determining the configuration limitation information.

In a possible implementation method, the request message further includes first indication information, and the first indication information indicates that the first model has a use range. Determining the configuration limitation information includes: determining the configuration limitation information based on the first indication information.

In the foregoing solution, the first network device sends, to the model management network element, the first indication information indicating that the first model has the use range, so as to trigger the model management network element to determine the configuration limitation information of the first model. This helps protect privacy of the first model.

In a possible implementation method, model identification information of the first model is generated for the first model, where the model identification information identifies the first model.

In the foregoing solution, the first model is identified by the model identification information. This helps accurately manage the first model.

In a possible implementation method, the method further includes: sending the model identification information to the first network device.

In a possible implementation method, the model identification information includes identifier information of the first model and/or identifier information of a model function of the first model.

In a possible implementation method, the method further includes: sending model information of the first model to a second network device, where the model information includes the model identification information and model management information of the first model.

In a possible implementation method, the request message includes the model management information.

In the foregoing solution, the model management information of the first model is sent to the model management network element based on the request message, to implement registration of the first model. This helps the model management network element correctly manage the first model.

In a possible implementation method, the model management information includes model running information of the first model and/or model feature information of the first model.

In a possible implementation method, the method further includes: sending the configuration limitation information to the second network device.

In a possible implementation method, the configuration limitation information includes information about at least one network device and/or identifier information of at least one area, the at least one network device is allowed to be configured with the first model, and a network device corresponding to the at least one area is allowed to be configured with the first model.

According to a third aspect, an embodiment of this application provides a communication method. The method may be performed by a terminal device or an apparatus, for example, a chip, used in the terminal device. The method includes: accessing a first network device; and receiving model information and configuration limitation information of a first model from the first network device, where the configuration limitation information indicates a network device that is allowed to be configured with the first model, and the first model is an AI model.

In the foregoing solution, the terminal device obtains the model information of the first model, so that the terminal device can correctly deploy the first model; and obtains the configuration limitation information of the first model, so that the terminal device can accurately determine, based on the configuration limitation information, the network device that is allowed to be configured with the first model. This helps protect privacy of the first model.

In a possible implementation method, the method further includes: receiving a handover command message from the first network device, where the handover command message includes identifier information of a second network device; and when the network device indicated by the configuration limitation information includes the second network device, sending a handover complete message to the second network device, where the handover complete message includes indication information. The indication information indicates that the terminal device has been configured with the first model and/or indicates a status of the first model, and the status is an activated state or a deactivated state; or the indication information indicates that the terminal device is not configured with the first model.

In the foregoing solution, the terminal device determines, based on the configuration limitation information of the first model, whether the second network device is allowed to be configured with the first model. This helps protect the privacy of the first model.

In a possible implementation method, the handover complete message further includes the model information.

In a possible implementation method, the method further includes: reselecting a cell, where the reselected cell belongs to a second network device, and the network device indicated by the configuration limitation information includes the second network device; and sending indication information to the second network device, where the indication information indicates that the terminal device has been configured with the first model and/or indicates a status of the first model, and the status is an activated state or a deactivated state; or the indication information indicates that the terminal device is not configured with the first model. For example, cell reselection may be performed based on the configuration limitation information.

In the foregoing solution, the terminal device notifies the second network device of a deployment status of the first model on the terminal device. This helps the second network device correctly manage deployment of the first model on the terminal device.

In addition, if the cell reselection is performed based on the configuration limitation information, a network device to which the reselected cell belongs is included in the network device that corresponds to the configuration limitation information, so that a network device that is allowed to be configured with the first model can be quickly selected.

In a possible implementation method, the method further includes: determining that the network device indicated by the configuration limitation information includes the second network device.

In a possible implementation method, the model information includes model identification information and model management information, where the model identification information includes identifier information of the first model and/or identifier information of a model function of the first model, and the model management information includes model running information of the first model and/or model feature information of the first model.

In a possible implementation method, the configuration limitation information includes information about at least one network device and/or identifier information of at least one area, the at least one network device is allowed to be configured with the first model, and a network device corresponding to the at least one area is allowed to be configured with the first model.

According to a fourth aspect, an embodiment of this application provides a communication apparatus. The apparatus may be a network device, or may be a module (for example, a chip) used in the network device. The apparatus has a function of implementing any one of the implementation methods of the first aspect. The function may be implemented by hardware, or may be implemented by hardware executing corresponding software. The hardware or the software includes one or more modules corresponding to the function.

According to a fifth aspect, an embodiment of this application provides a communication apparatus. The apparatus may be a model management network element, or may be a module (for example, a chip) used in the model management network element. The apparatus has a function of implementing any one of the implementation methods of the second aspect. The function may be implemented by hardware, or may be implemented by hardware executing corresponding software. The hardware or the software includes one or more modules corresponding to the function.

According to a sixth aspect, an embodiment of this application provides a communication apparatus. The apparatus may be a terminal device, or may be a module (for example, a chip) used in the terminal device. The apparatus has a function of implementing any one of the implementation methods of the third aspect. The function may be implemented by hardware, or may be implemented by hardware executing corresponding software. The hardware or the software includes one or more modules corresponding to the function.

According to a seventh aspect, an embodiment of this application provides a communication apparatus, including a processor and a memory. The memory is configured to store computer instructions, and when the apparatus is run, the processor executes the computer instructions stored in the memory, to enable the apparatus to perform any one of the implementation methods of the first aspect to the third aspect.

According to an eighth aspect, an embodiment of this application provides a communication apparatus, including a unit or means (means) used to perform steps of any one of the implementation methods of the first aspect to the third aspect.

According to a ninth aspect, an embodiment of this application provides a communication apparatus, including a processor and an interface circuit. The processor is configured to: communicate with another apparatus through the interface circuit, and perform any one of the implementation methods of the first aspect to the third aspect. There are one or more processors.

According to a tenth aspect, an embodiment of this application provides a communication apparatus, including a processor coupled to a memory. The processor is configured to invoke a program stored in the memory, to perform any one of the implementation methods of the first aspect to the third aspect. The memory may be located inside or outside the apparatus. In addition, there may be one or more processors.

According to an eleventh aspect, an embodiment of this application further provides a computer-readable storage medium. The computer-readable storage medium stores instructions, and when the instructions are run on a communication apparatus, any one of the implementation methods of the first aspect to the third aspect is performed.

According to a twelfth aspect, an embodiment of this application further provides a computer program product. The computer program product includes a computer program or instructions. When the computer program or the instructions are run by a communication apparatus, any one of the implementation methods of the first aspect to the third aspect is performed.

According to a thirteenth aspect, an embodiment of this application further provides a chip system, including a processor, configured to perform any one of the implementation methods of the first aspect to the third aspect.

According to a fourteenth aspect, an embodiment of this application further provides a communication system, including a first network device configured to perform any one of the implementation methods of the first aspect and a model management network element configured to perform any one of the implementation methods of the second aspect.

According to a fifteenth aspect, an embodiment of this application further provides a communication method, including: A first network device sends a request message to a model management network element, where the request message is used for requesting to register a first model with the model management network element, and the first model is an AI model. The model management network element sends configuration limitation information of the first model to the first network device, where the configuration limitation information indicates a network device that is allowed to be configured with the first model.

<u>BRIEF DESCRIPTION OF DRAWINGS</u>

FIG. 1(a) is a diagram of an architecture of a communication system to which an embodiment of this application is applied;
FIG. 1(b) is a diagram of a network device;
FIG. 1(c) is a diagram of a communication system according to an embodiment of this application;
FIG. 2(a) is a diagram of a structure of a neuron;
FIG. 2(b) is a diagram of a relationship between layers of a neural network;
FIG. 3 is a schematic flowchart of a communication method according to an embodiment of this application;
FIG. 4 is a schematic flowchart of a communication method according to an embodiment of this application;
FIG. 5 is a diagram of a structure of a communication apparatus according to an embodiment of this application; and
FIG. 6 is a diagram of a structure of a communication apparatus according to an embodiment of this application.

<u>DESCRIPTION OF EMBODIMENTS</u>

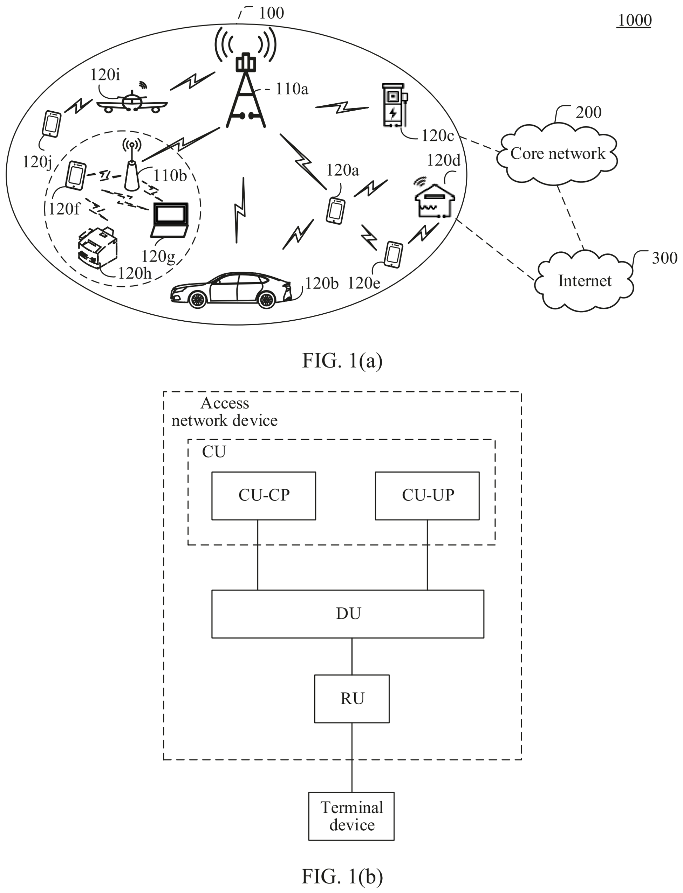

FIG. 1(a) is a diagram of an architecture of a communication system to which an embodiment of this application is applied. The communication system 1000 shown in FIG. 1(a) includes an access network 100 and a core network 200. For example, the communication system 1000 further includes the Internet 300. The access network 100 may include at least one access network device (for example, 110a and 110b shown in FIG. 1(a)), and may further include at least one terminal device (for example, 120a to 120j shown in FIG. 1(a)). The terminal device is connected to the access network device in a wireless manner, and the access network device is connected to the core network in a wireless or wired manner. A core network device and the access network device may be different physical devices that are independent of each other, or a function of the core network device and a logical function of the access network device may be integrated into a same physical device, or some functions of the core network device and some functions of the access network device may be integrated into one physical device. Terminal devices may be connected to each other in a wired or wireless manner, and access network devices may be connected to each other in a wired or wireless manner. FIG. 1(a) is merely a diagram. The communication system may further include another access network device, for example, may further include a wireless relay device and a wireless backhaul device, which are not shown in FIG. 1(a).
The access network device is an access device through which the terminal device accesses the communication system in a wired or wireless manner. The access network device may be a base station (base station), including, for example, an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, or an access node in a wireless fidelity (wireless fidelity, Wi-Fi) system; or may be a module or a unit that completes some functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to related technical specifications in the 3GPP. The access network device may be a macro base station (for example, 110a in FIG. 1(a)), or may be a micro base station or an indoor base station (for example, 110b in FIG. 1(a)), or may be a relay node, a donor node, or the like. A specific technology and a specific device form that are used by the access network device are not limited in embodiments of this application.
The terminal device is a device that has a wireless transceiver function, and may send a signal to the access network device, or receive a signal from the access network device. The terminal device includes but is not limited to a terminal apparatus, a terminal, user equipment (user equipment, UE), a mobile station, a mobile terminal, and the like. The terminal device may be widely used in various scenarios, for example, device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, self-driving, telemedicine, a smart grid, smart furniture, smart office, smart wearable, smart transportation, and a smart city. The terminal device may specifically be a mobile phone, a tablet computer, a computer with a wireless transceiver function, a wearable device, a vehicle, an airplane, a steamship, a robot, a robotic arm, a smart home device, or the like. A specific technology and a specific device form that are used by the terminal device are not limited in embodiments of this application.

The access network device and the terminal device may be at fixed locations, or may be movable. The access network device and the terminal device may be deployed on the land, including an indoor device, an outdoor device, a handheld device, or a vehicle-mounted device; or may be deployed on a water surface; or may be deployed on an airplane, a balloon, or an artificial satellite. Application scenarios of the access network device and the terminal device are not limited in embodiments of this application.

A role of the access network device and a role of the terminal device may be relative to each other. For example, a helicopter or an uncrewed aerial vehicle 120i in FIG. 1(a) may be configured as a mobile access network device. For those terminal devices 120j that access the access network 100 through 120i, the terminal device 120i is an access network device. However, for a first access network device 10a, 120i is a terminal device, that is, 110a and 120i communicate with each other according to a radio air interface protocol. Certainly, 110a and 120i may alternatively communicate with each other according to an interface protocol between access network devices. In this case, for 110a, 120i is also an access network device. Therefore, both the access network device and the terminal device may be collectively referred to as communication apparatuses. 110a and 110b in FIG. 1(a) may be referred to as communication apparatuses functioning as the access network device, and 120a to 120j in FIG. 1(a) may be referred to as communication apparatuses functioning as the terminal device.

Communication between the access network device and the terminal device, communication between the access network devices, and communication between the terminal devices may be performed by using a licensed spectrum, an unlicensed spectrum, or both a licensed spectrum and an unlicensed spectrum; or may be performed by using a spectrum below 6 gigahertz (gigahertz, GHz), a spectrum above 6 GHz, or both a spectrum below 6 GHz and a spectrum above 6 GHz. A spectrum resource used for wireless communication is not limited in embodiments of this application.

In embodiments of this application, a function of the access network device may alternatively be performed by a module (for example, a chip) in the access network device, or may be performed by a control subsystem including the function of the access network device. The control subsystem including the function of the access network device herein may be a control center in the foregoing application scenarios such as the smart grid, the industrial control, the smart transportation, and the smart city. A function of the terminal device may alternatively be performed by a module (for example, a chip or a modem) in the terminal device, or may be performed by an apparatus including the function of the terminal device.

In this application, the access network device sends a downlink signal or downlink information to the terminal device, and the downlink information is carried on a downlink channel. The terminal device sends an uplink signal or uplink information to the access network device, and the uplink information is carried on an uplink channel. To communicate with the access network device, the terminal device needs to establish a wireless connection to a cell controlled by the access network device. The cell to which the terminal device establishes the wireless connection is referred to as a serving cell of the terminal device.

The core network 200 includes one or more core network devices. The core network device includes but is not limited to one or more of the following network elements: an authentication server function (authentication server function, AUSF) network element, a unified data management (unified data management, UDM) network element, a unified data repository (unified data repository, UDR) network element, a network repository function (network repository function, NRF) network element, a network exposure function (network exposure function, NEF) network element, an application function (application function, AF) network element, a policy control function (policy control function, PCF) network element, an access and mobility management function (access and mobility management function, AMF) network element, a session management function (session management function, SMF) network element, a user plane function (user plane function, UPF) network element, a binding support function (binding support function, BSF) network element, or a network data analytics function (network data analytics function, NWDAF) network element.

FIG. 1(b) is a diagram of an access network device. As shown in FIG. 1(b), the access network device includes one or more CUs, one or more DUs, and one or more radio units (radio units, RUs). For clarity, FIG. 1(b) shows only one CU, one DU, and one RU. The CU is configured to connect to a core network and the one or more DUs. For example, the CU may have some functions of the core network. The CU may include a CU-control plane (control plane, CP) and a CU-user plane (user plane, UP).

The CU and the DU may be configured based on protocol layer functions implemented by the CU and the DU in a wireless network. For example, the CU is configured to implement functions of a packet data convergence protocol (packet data convergence protocol, PDCP) layer and a protocol layer (for example, a radio resource control (radio resource control, RRC) layer and/or a service data adaptation protocol (service data adaptation protocol, SDAP) layer) above the packet data convergence protocol layer. The DU is configured to implement a function of a protocol layer (for example, a radio link control (radio link control, RLC) layer, a medium access control (medium access control, MAC) layer, and/or a physical (physical, PHY) layer) below the PDCP layer. For another example, the CU is configured to implement a function of a protocol layer (for example, an RRC layer and/or an SDAP layer) above a PDCP layer. The DU is configured to implement functions of the PDCP layer and a protocol layer (for example, an RLC layer, a MAC layer, and/or a PHY layer) below the PDCP layer.

The foregoing configuration of the CU and the DU is merely an example. Alternatively, functions of the CU and the DU may be configured based on a need. For example, the CU or the DU may be configured to have functions of more protocol layers, or the CU or the DU may be configured to have some processing functions of a protocol layer. For example, some functions of the RLC layer and a function of a protocol layer above the RLC layer are set in the CU, and a remaining function of the RLC layer and a function of a protocol layer below the RLC layer are set in the DU. For another example, division of functions of the CU or the DU may be performed based on a service type or another system need, for example, based on a latency. A function whose processing time needs to meet a requirement of a low latency is set in the DU, and a function whose processing time does not need to meet the latency requirement is set in the CU.

The DU and the RU may work together to jointly implement a function of the PHY layer. One DU may be connected to the one or more RUs. Functions of the DU and the RU may be configured in a plurality of manners based on a design. For example, the DU is configured to implement a baseband function, and the RU is configured to implement an intermediate radio frequency function. For another example, the DU is configured to implement a high-layer function of the PHY layer, and the RU is configured to: implement a low-layer function of the PHY layer, or implement the low-layer function and a radio frequency function. The high-layer function of the physical layer may include some functions of the physical layer, and these functions are closer to the MAC layer. The low-layer function of the physical layer may include other functions of the physical layer, and these functions are closer to an intermediate radio frequency side.

In different systems, the CU (or a CU-CP and a CU-UP), the DU, or the RU may also have different names, and a person skilled in the art may understand meanings thereof. For example, in an open RAN (open RAN, ORAN) system, the CU may also be referred to as an open CU (O-CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

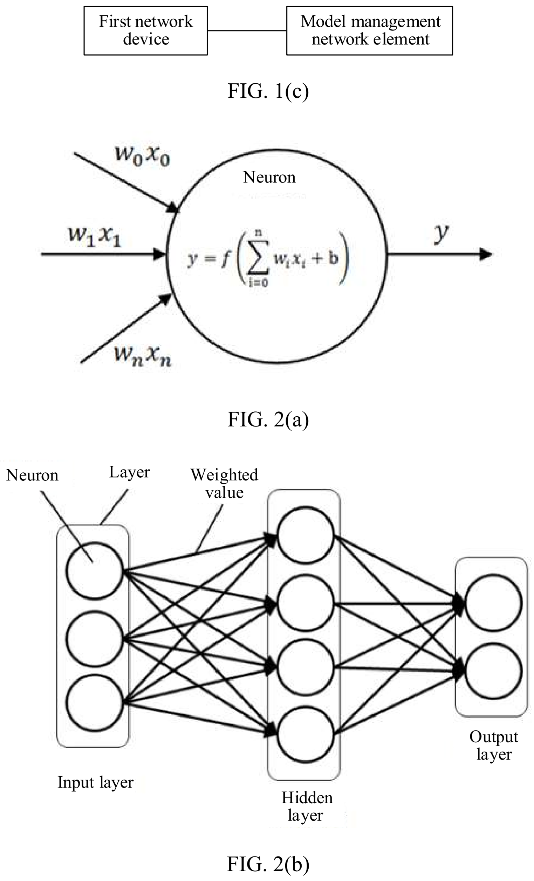

FIG. 1(c) is a diagram of a communication system according to an embodiment of this application. The communication system includes a first network device and a model management network element. The first network device may be the access network device or the core network device described above. The model management network element is a network element that manages an AI model, or a network element that has an AI model management function. The model management network element may be a terminal device, a network device, an operation, administration and maintenance (operation, administration and management, OAM) device, or a third-party service device. The network device may be the foregoing access network device or core network device. The third-party service device may be an over the top (over the top, OTT) device or another service provider device that can provide an application service. It may be understood that the "model" described in this application is the AI model.

In embodiments of this application, one AI model may be deployed only on a network device or a terminal device, may be deployed on both a network device and a terminal device, or may be deployed on three or more devices. The three or more devices may be devices of a same type. For example, all the devices are terminal devices or access network devices. Alternatively, the three or more devices may be devices of different types. For example, one AI model is deployed on one network device and two terminal devices. Therefore, the AI model in embodiments of this application is classified into the following several types:

1. One-sided model (one-sided model)

The one-sided model is a model deployed only on the network device or the terminal device, and the one-sided model includes a network-sided model (network-sided model, NW-sided model) and a UE-sided model (UE-sided model).

2. Two-sided model (two-sided model)

The two-sided model means that a model is divided into two parts. One part is deployed on the terminal device, and the other part is deployed on the network device. The two parts cooperate with each other to implement a function of the model.

3. Multi-sided model (multi-sided model)

The multi-sided model means that a model is divided into three or more parts. Each part is deployed on a device, and different parts are deployed on different devices. The plurality of devices cooperate with each other to implement a function of the model.

The AI model in embodiments of this application may include various deep neural networks. A neural network is a specific implementation form of machine learning. The neural network may be used to perform a classification task and a prediction task, and may also be used to establish conditional probability distribution between variables. A common neural network includes the deep neural network (deep neural network, DNN), a generative neural network (generative neural network, GNN), and the like. Based on a network construction manner, the DNN may include a feedforward neural network (feedforward neural network, FNN), a convolutional neural network (convolutional neural network, CNN), a recurrent neural network (recurrent neural network, RNN), and the like. The GNN includes a generative adversarial network (generative adversarial network, GAN) and a variational autoencoder (variational autoencoder, VAE). The neural network is constructed based on a neuron. The following uses the DNN as an example to describe computing and optimization mechanisms of the neural network. It may be understood that a specific implementation of the neural network is not limited in embodiments of this application. In the DNN, each neuron performs a weighted summation operation on an input value of the neuron, and generates an output by inputting a weighted summation result into an activation function. FIG. 2(a) is a diagram of a structure of a neuron. It is assumed that an input of the neuron is $x = [x_0, x_1,...x_n]$ , a weighted value corresponding to the input is $w = [w_0, w_1,...w_n]$, a bias of weighted summation is b, and there may be various forms of an activation function. For example, the activation function is $y = f(x) = max\{0, x\}$. In this case, an output performed by the neuron is $y = f(\sum_{i=0}^{n} w_i x_i + b) = max\{0, \sum_{i=0}^{n} w_i x_i + b\}$ . $w_i x_i$ represents a product of $w_i$ and $x_i$. The DNN generally has a multi-layer structure. Each layer of the DNN may include a plurality of neurons. An input layer processes a received value by using the neuron, and then transfers a processed value to an intermediate hidden layer. Similarly, the hidden layer transfers a computing result to a final output layer, to generate a final output of the DNN. FIG. 2(b) is a diagram of a relationship between layers of a neural network. The DNN generally has one or more hidden layers, and the hidden layer usually directly affects capabilities of extracting information and fitting a function. Increasing a quantity of hidden layers of the DNN or increasing a quantity of neurons at each layer can improve a function fitting capability of the DNN. A parameter of each neuron includes a weighted value, a bias, and an activation function. A set including parameters of neurons in the DNN is referred to as a DNN parameter (or referred to as a neural network parameter). The weighted value and the bias of the neuron may be optimized in a training process, so that the DNN has capabilities of extracting a data feature and expressing a mapping relationship.

An AI model parameter includes information related to the neural network. For example, one or more of the following content may be included:

(1) Model architecture information: The model architecture information may also be referred to as information related to a neural network structure, for example, a type of the neural network (for example, the deep neural network or the generative neural network), a quantity of layers of the neural network, or a quantity of neurons.

(2) Model parameter: The model parameter may also be referred to as a connection manner of the neuron or the network layer.

(3) Neuron parameter: The neuron parameter may be understood as the parameter of each neuron in the neural network, for example, the weighted value, the bias, and the activation function.

To protect model privacy, a corresponding solution is provided in this application. The "privacy" herein means that a model is used by a device within a limited range, that is, it is ensured that the model is not used by a device beyond the range. It may be understood that the method provided in this application may be performed by a first network device, a model management network element, and a terminal device, or may be performed by a module (for example, a chip) used in the first network device, the model management network element, and the terminal device. The following describes the communication method provided in this application by using the first network device, the model management network element, and the terminal device as execution bodies.

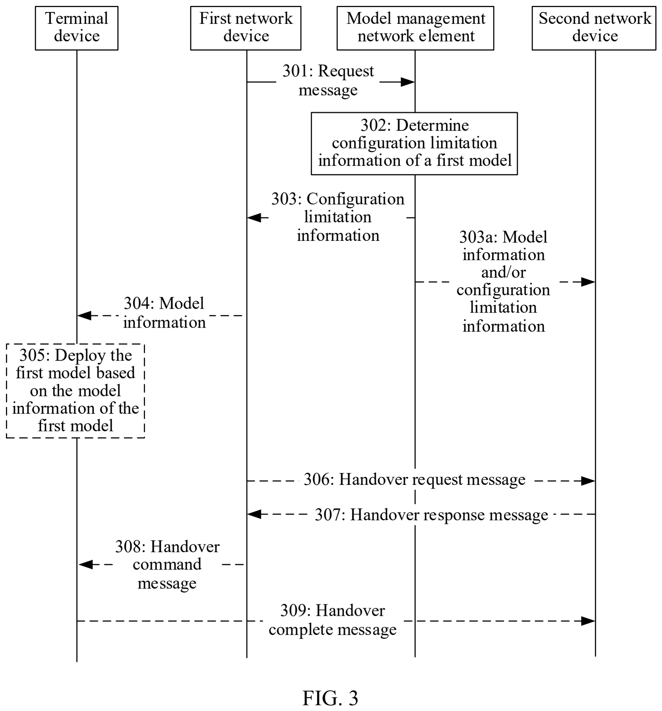

FIG. 3 is a schematic flowchart of a communication method according to an embodiment of this application. The method includes the following steps.

Step 301: A first network device sends a request message to a model management network element. Correspondingly, the model management network element receives the request message.

For example, the first network device and the model management network element are applicable to the communication system described in FIG. 1(c).

The request message is used for requesting to register a first model with the model management network element. The first model may be obtained through training by the first network device, or may be obtained through training by a model provider and provided to the first network device. The first model is an AI model.

The model provider may train the first model and obtain model management information of the first model. The model provider may be a terminal device, a network device other than the first network device, an OAM device, or a third-party service device. The model provider and the model management network element are different devices. It should be noted that, if the model provider is a terminal device, that is, if the terminal device trains a model, that the terminal device trains the model may be understood as that at least one of the terminal device, a terminal device manufacturer, or a chip manufacturer trains the model.

For example, the request message includes the model management information of the first model, and the model management information of the first model includes model running information of the first model and/or model feature information of the first model. The model running information includes at least one of the following information: model architecture information (for example, at least one of a type of a neural network, a quantity of layers of the neural network, or a quantity of neurons) of the first model, at least one model parameter (for example, a connection manner of the neuron or the network layer) of the first model, a neuron parameter (for example, at least one of a weighted value, a bias, or an activation function) of at least one model layer of the first model, model function information of the first model, manufacturer information (for example, information about a manufacturer that provides the first model) related to the first model, chip information (for example, information about a chip that can run the first model) related to the first model, provider information of the first model, applicable scenario information of the first model, input parameter information of the first model, output parameter information of the first model, performance information of the first model, or other model running information of the first model. Application scenarios of the first model include but are not limited to scenarios such as an energy saving (energy saving) scenario, a load balancing (load balancing) scenario, a mobility optimization (mobility optimization) scenario, a channel state information-reference signal (channel state information-reference signal, CSI-RS) feedback enhancement scenario, a beam management enhancement (beam management enhance, BME) scenario, and a positioning enhancement scenario. These application scenarios may also be referred to as AI use cases (use cases). The model feature information of the first model is also referred to as the first model itself or the first model. In an example, the model feature information of the first model may be used as a container (container), including a model architecture of the first model, the at least one model parameter of the first model, and the neuron parameter of the at least one model layer of the first model.

For example, the request message further includes first indication information. The first indication information indicates that the first model has a use range, and the use range may refer to a network device that is allowed to be configured with the first model. The first indication information is also referred to as privacy requirement information. In a specific example, the first indication information indicates that a network device that is from a same manufacturer as the first network device is allowed to be configured with the first model, or the first indication information indicates that a network device that corresponds to a same network identifier as the first network device is allowed to be configured with the first model. The network identifier includes a public land mobile network (public land mobile network, PLMN) identifier, includes a PLMN identifier and a private network identifier, includes a PLMN identifier and unauthorized network information, or includes a PLMN identifier and another network type identifier.

Step 302: The model management network element determines configuration limitation information of the first model.

In an implementation method, when the request message includes the first indication information, the model management network element determines the configuration limitation information of the first model based on the first indication information. In another implementation method, when the request message does not include the first indication information, the model management network element determines the configuration limitation information of the first model based on a protocol predefinition.

The configuration limitation information is also referred to as indication information, configuration information, configuration indication information, or the like. The configuration limitation information indicates a network device that is allowed to be configured with the first model. For example, the configuration limitation information includes information about at least one network device and/or identifier information of at least one area. The at least one network device is allowed to be configured with the first model, and the at least one network device includes the first network device. A network device corresponding to the at least one area is allowed to be configured with the first model, and the network device corresponding to the at least one area includes the first network device.

The information about the network device includes identifier information of the network device and/or the PLMN identifier.

The identifier information of the area includes at least one of the following information: cell identifier information, the PLMN identifier, the private network identifier, or a zone identifier (zone ID). The cell identifier information includes at least one of the following information: a cell global identifier (cell global identifier, CGI), a physical cell identifier (physical cell identifier, PCI) and a frequency, a cell identifier (cell identifier, cell ID), a non-public network identifier (non-public network identifier, NPN ID), a non-terrestrial network identifier (non-terrestrial network identifier, NTN ID), a tracking area code (tracking area code, TAC), or identifier information (for example, a global network device identifier) of a network device to which a cell belongs. The zone identifier indicates an area including at least one cell. For example, different network devices may exchange zone identifiers, and the network device may send the zone identifier to the terminal device by using a system message or a radio resource control (radio resource control, RRC) message.

In the foregoing solution, based on a model registration mechanism, the model management network element may obtain the model management information of the first model and maintain the model management information. For example, in step 302, the model management network element may further allocate model identification information to the first model based on the model management information of the first model, where the model identification information identifies the first model. The model identification information of the first model includes identifier information (for example, a model ID) of the first model and/or identifier information (for example, a functionality ID) of a model function of the first model. The model function includes, for example, at least one of a channel state information (channel state information, CSI) feedback enhancement function, a beam management enhancement function, a positioning enhancement function, or another AI function. For example, the model identification information may further indicate information about a trainer of the first model and/or the running information of the first model. The trainer of the first model is a manufacturer or a device that obtains the first model through training. The information about the trainer of the first model includes one or more of the following information: information about the terminal device manufacturer, information about the chip manufacturer, information about a network device manufacturer, information about an operator, or information about the third-party service device.

In this embodiment of this application, the model identification information of the first model and the model management information of the first model are collectively referred to as model information of the first model, that is, the model information of the first model includes the model identification information and the model management information.

Step 303: The model management network element sends the configuration limitation information of the first model to the first network device. Correspondingly, the first network device receives the configuration limitation information of the first model.

If the model management network element further determines the model identification information of the first model in step 302, the model management network element further sends the model identification information of the first model to the first network device in step 303. Correspondingly, the first network device may establish an association between the model identification information of the first model and the model management information of the first model, and store the model information, where the model information includes the model identification information of the first model and the model management information of the first model.

Step 303a: The model management network element sends the model information of the first model and/or the configuration limitation information of the first model to another network device. Correspondingly, the another network device receives the model information of the first model and/or the configuration limitation information of the first model.

The model information of the first model includes the model identification information of the first model and the model management information of the first model.

The another network device is one or more network devices other than the first network device. It may be understood that the another network device is a network device indicated by the configuration limitation information of the first model. In FIG. 3, a second network device in the another network device is used as an example.

Step 303a is an optional step.

For a UE-sided model and a two-sided model, the following step 304 and step 305 may be further performed.

Step 304: The first network device sends the model information of the first model to the terminal device. Correspondingly, the terminal device receives the model information of the first model.

For example, in this step, the first network device further sends the configuration limitation information of the first model to the terminal device.

It should be noted that, before step 304, that the terminal device accesses the first network device is further included. Therefore, a connection between the first network device and the terminal device may be established.

Step 305: The terminal device deploys the first model based on the model information of the first model.

In an implementation method, if the first network device determines to hand over the terminal device to the another network device (the second network device is used as an example), step 306 to step 309 may be further performed. The first network device is specifically a source access network device, and the second network device is specifically a target access network device.

Step 306: The first network device sends a handover request message to the second network device. Correspondingly, the second network device receives the handover request message.

The handover request message is used for requesting to hand over the terminal device from the first network device to the second network device.

Step 307: The second network device sends a handover response message to the first network device. Correspondingly, the first network device receives the handover response message.

Step 308: The first network device sends a handover command message to the terminal device. Correspondingly, the terminal device receives the handover command message.

The handover command message includes identifier information of a cell managed by the second network device.

Step 309: The terminal device sends a handover complete message to the second network device. Correspondingly, the second network device receives the handover complete message.

For different model deployment manners, the following describes information carried in the messages in step 306 to step 309.

A case 1 is for a NW-sided model.

In an implementation method, before step 306, the first network device determines, based on the configuration limitation information of the first model, whether the second network device is allowed to be configured with the first model. If the network device indicated by the configuration limitation information of the first model includes the second network device, the first network device determines that the second network device is allowed to be configured with the first model. If the network device indicated by the configuration limitation information of the first model does not include the second network device, the first network device determines that the second network device is not allowed to be configured with the first model. If it is determined that the second network device is allowed to be configured with the first model and it is determined that the first model is not deployed on the second network device, the handover request message in step 306 includes the model information of the first model. In an example, before step 306, the first network device may receive information that is sent by the second network device and that indicates that the first model has been deployed on the second network device. For example, the handover response message in step 307 may further include indication information, where the indication information indicates a status of the first model in the second network device, and the status may be an activated state or a deactivated state. The activated state means that the first model has been deployed and is activated, and a model deployment device (the second network device and/or the terminal device) may use the first model to perform data processing or analysis. The deactivated state means that the first model has been deployed but is not activated, and the model deployment device cannot use the first model to perform data processing or analysis.

In another implementation method, the handover request message in step 306 includes the model identification information of the first model, and the second network device determines, based on the model identification information, whether the first model has been deployed. If the second network device stores model information corresponding to the model identification information, it indicates that the first model has been deployed. If the second network device does not store model information corresponding to the model device information, or the second network device does not store model running information or model feature information corresponding to the model device information, it indicates that the first model is not deployed or is not completely deployed on the second network device. The second network device may add indication information to the handover response message in step 307, where the indication information indicates whether the first model has been deployed on the second network device. If the first model is not deployed on the second network device, the first network device separately sends the model information of the first model, the model management information of the first model, the model running information of the first model, or the model feature information of the first model to the second network device after step 307.

A case 2 is for the UE-sided model.

In an implementation method, the handover request message in step 306 includes second indication information, where the second indication information indicates that the terminal device has been configured with the first model and/or indicates a status of the first model, and the status is an activated state or a deactivated state. Alternatively, the second indication information indicates that the terminal device is not configured with the first model. A deployment status that is of the first model and that is indicated by the second indication information is a (latest) deployment status of the first model on the terminal device. For example, before sending the handover request message, the first network device determines a (latest) deployment status of the first model on the terminal device when the terminal device accesses the first network device. Correspondingly, the handover response message in step 307 and the handover command message in step 308 may further include third indication information, where the third indication information indicates a status that is after the terminal device is handed over to the second network device and that is of the first model that has been configured for the terminal device, and the status is an activated state or a deactivated state. A deployment status that is of the first model and that is indicated by the third indication information means configuration information that is for the first model and that is indicated by the second network device to the terminal device after the terminal device is handed over to access the second network device. For example, the second network device configures the first model on the terminal device to be in an activated state or a deactivated state. When the terminal device is successfully handed over to the second network device, the terminal device determines, based on the third indication information, to activate or deactivate the first model.

Alternatively, in another implementation method, the terminal device may include deployment information of the first model on the terminal device in the handover complete message in step 309. The deployment information may be indication information, where the indication information indicates that the terminal device has been configured with the first model and/or indicates a status of the first model, and the status is an activated state or a deactivated state; or the indication information indicates that the terminal device is not configured with the first model. For example, the handover complete message further includes the model information of the first model.

A case 3 is for the two-sided model.

The case 3 is a combination of the foregoing case 1 and case 2. Therefore, in the case 3, for specific implementations of content carried in the messages in step 306 to step 309, refer to descriptions of the foregoing case 1 and case 2. Details are not described again.

It should be noted that, for the case 3, if the handover request message in step 306 does not include the second indication information, after determining, based on the configuration limitation information of the first model, that the second network device is allowed to be configured with the first model, the terminal device includes deployment information of the first model on the terminal device in the handover complete message in step 309. The deployment information may be indication information, where the indication information indicates that the terminal device has been configured with the first model and/or indicates a status of the first model, and the status is an activated state or a deactivated state; or the indication information indicates that the terminal device is not configured with the first model.

It should be noted that, in a handover scenario, if the first network device selects, with reference to the configuration limitation information of the first model, a target network device that is handed over to, the first network device may select a target network device from the network device indicated by the configuration limitation information. In this case, the selected target network device can use the first model.

In the foregoing solution, configuration limitation information of a model is introduced, so that a privacy requirement on model configuration or model use can be met. This helps improve security of the model. In addition, in the handover scenario, whether the second network device that is handed over to is allowed to use the model may be determined based on the configuration limitation information.

It should be noted that, in the foregoing embodiment in FIG. 3, an example in which the model management network element and the network device are different network elements is used for description, that is, a deployment location of a network element having a model management function is not on the network device. In another implementation method, if the model management network element and the network device are a same device, that is, the model management function is deployed on the network device (for example, deployed on the first network device), operations performed by the model management network element in the foregoing embodiment in FIG. 3 may be performed by the first network device. Specifically, step 302 and step 303a are performed by the first network device. In addition, step 301 and step 303 are operations between different functional modules inside the first network device, or step 301 and step 303 may not be performed.

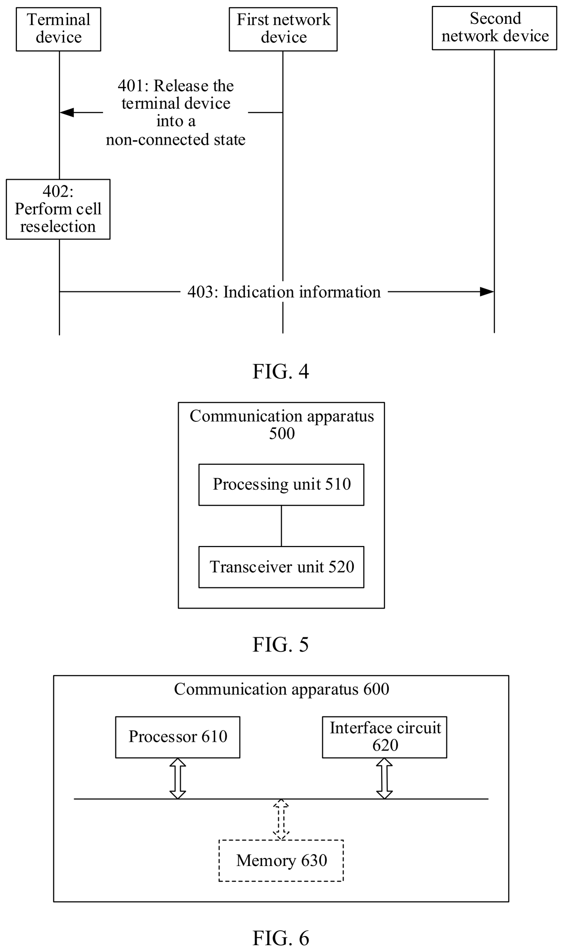

FIG. 4 is a schematic flowchart of a communication method according to an embodiment of this application. The method includes the following steps.

Step 401: A first network device releases a terminal device into a non-connected state.

The non-connected state herein may be an idle (idle) state or an inactive (inactive) state.

In an implementation method, if before step 401, the first network device does not send configuration limitation information of a first model to the terminal device, or the first network device determines that configuration limitation information of a first model changes, the first network device may send latest configuration limitation information of the first model to the terminal device in step 401.

For a UE-sided model and a two-sided model, if the terminal device receives the configuration limitation information of the first model from the first network device, the terminal device may deactivate the first model after entering the non-connected state. If the terminal device does not receive the configuration limitation information of the first model from the first network device, the terminal device may delete the first model after entering the non-connected state.

Step 402: The terminal device performs cell reselection.

In an implementation method, the terminal device determines, based on measured quality of one or more cells, a reselected target cell from the one or more cells.

In another implementation method, the terminal device determines, based on the configuration limitation information of the first model and measured quality of one or more cells, a reselected target cell from the one or more cells. A network device indicated by the configuration limitation information of the first model includes a network device to which the reselected cell belongs, that is, the network device to which the reselected cell belongs is a network device that can be configured with the first model. In a specific example, the configuration limitation information of the first model includes a cell list, and the terminal device determines the reselected target cell based on the measured quality of the one or more cells and depending on whether the measured cell belongs to the cell list, where the determined reselected target cell is a cell indicated by the cell list.

For example, the network device to which the reselected target cell belongs is a second network device. In this case, for the UE-sided model and the two-sided model, if UE accesses the reselected target cell, the following step 403 may be further performed.

Step 403: The terminal device sends indication information to the second network device. Correspondingly, the second network device receives the indication information.

The indication information indicates that the terminal device has been configured with the first model and/or indicates a status of the first model, and the status is an activated state or a deactivated state; or the indication information indicates that the terminal device is not configured with the first model.

If the terminal device determines, based on the measured quality of the one or more cells, the reselected target cell from the one or more cells, before step 403, the terminal device needs to determine that the network device indicated by the configuration limitation information of the first model includes the network device to which the reselected target cell belongs.

In the foregoing solution, configuration limitation information of a model is introduced, so that a privacy requirement on model configuration or model use can be met. This helps improve security of the model. In addition, in a cell reselection scenario, the terminal device may reselect the cell based on the configuration limitation information.

In an implementation method, the embodiment in FIG. 3 and the embodiment in FIG. 4 may be combined with each other. For example, step 301 to step 303 in the embodiment in FIG. 3 are performed before step 401 in the embodiment in FIG. 4, so that the first network device obtains the configuration limitation information of the first model. Alternatively, step 301 to step 305 in the embodiment in FIG. 3 are performed before step 401 in the embodiment in FIG. 4, so that the first network device obtains the configuration limitation information of the first model, and further sends the model information of the first model to the terminal device, and the terminal device deploys the first model based on the model information of the first model. Alternatively, after the handover procedure in the embodiment in FIG. 3 is performed, the embodiment in FIG. 4 is performed when a cell reselection condition is met. A manner of combining the embodiment in FIG. 3 and the embodiment in FIG. 4 is not limited in this application.

It may be understood that in embodiments of this application, the first network device, the model management network element, and the terminal device may perform some or all of the steps in embodiments of this application, and these steps or operations are merely examples. In embodiments of this application, another operation or variants of various operations may further be performed. In addition, the steps may be performed in an order different from an order presented in embodiments of this application, and it is possible that not all the operations in embodiments of this application are performed.

It may be understood that, to implement the functions in the foregoing embodiments, the first network device, the model management network element, and the terminal device include corresponding hardware structures and/or software modules for performing the functions. A person skilled in the art should be readily aware that, with reference to the units and method steps in the examples described in embodiments disclosed in this application, this application can be implemented by hardware or a combination of hardware and computer software. Whether a function is performed by hardware or hardware driven by computer software depends on a particular application scenario and a design constraint condition of the technical solutions.

FIG. 5 and FIG. 6 are diagrams of structures of possible communication apparatuses according to embodiments of this application. These communication apparatuses may be configured to implement functions of the first network device, the model management network element, and the terminal device in the foregoing method embodiments, and therefore can also achieve beneficial effects of the foregoing method embodiments. In embodiments of this application, the communication apparatus may be the first network device, the model management network element, or the terminal device, or may be a module (for example, a chip) used in the first network device, the model management network element, or the terminal device.

A communication apparatus 500 shown in FIG. 5 includes a processing unit 510 and a transceiver unit 520. The communication apparatus 500 is configured to implement functions of the first network device, the model management network element, and the terminal device in the foregoing method embodiments.

When the communication apparatus 500 is configured to implement a function of the first network device in the foregoing embodiments, the transceiver unit 520 is configured to: send a request message to a model management network element, where the request message is used for requesting to register a first model with the model management network element, and the first model is an AI model; and receive configuration limitation information of the first model from the model management network element, where the configuration limitation information indicates a network device that is allowed to be configured with the first model.

In a possible implementation method, the transceiver unit 520 is further configured to receive model identification information of the first model from the model management network element, where the model identification information identifies the first model.

In a possible implementation method, the transceiver unit 520 is further configured to send model information of the first model to a terminal device, where the model information includes the model identification information and model management information of the first model.

In a possible implementation method, the request message includes the model management information.

In a possible implementation method, the model management information includes model running information of the first model and/or model feature information of the first model.

In a possible implementation method, the model identification information includes identifier information of the first model and/or identifier information of a model function of the first model.

In a possible implementation method, the transceiver unit 520 is further configured to send the configuration limitation information to the terminal device.

In a possible implementation method, the request message further includes first indication information, and the first indication information indicates that the first model has a use range.

In a possible implementation method, the first indication information indicates that a network device that is from a same manufacturer as the first network device is allowed to be configured with the first model. Alternatively, the first indication information indicates that a network device that corresponds to a same network identifier as the first network device is allowed to be configured with the first model.

In a possible implementation method, the transceiver unit 520 is further configured to send a handover request message to a second network device. When the network device indicated by the configuration limitation information includes the second network device and the first model is not deployed on the second network device, the handover request message includes the model information of the first model, and the model information includes the model management information of the first model and the model identification information of the first model.

In a possible implementation method, the handover request message further includes second indication information, where the second indication information indicates that the terminal device has been configured with the first model and/or indicates a status of the first model, and the status is an activated state or a deactivated state; or the second indication information indicates that the terminal device is not configured with the first model.

In a possible implementation method, the processing unit 510 is configured to determine, before the transceiver unit 520 sends the handover request message to the second network device, that the second network device is not configured with the first model.

In a possible implementation method, the transceiver unit 520 is further configured to: receive a handover response message from the second network device, where the handover response message includes third indication information, the third indication information indicates a status that is after the terminal device is handed over to the second network device and that is of the first model that has been configured for the terminal device, and the status is an activated state or a deactivated state; and send a handover command message to the terminal device, where the handover command message includes the third indication information.

In a possible implementation method, the configuration limitation information includes information about at least one network device and/or identifier information of at least one area, the at least one network device is allowed to be configured with the first model, and a network device corresponding to the at least one area is allowed to be configured with the first model.

When the communication apparatus 500 is configured to implement a function of the model management network element in the foregoing embodiments, the transceiver unit 520 is configured to: receive a request message from a first network device, where the request message is used for requesting to register a first model with the model management network element, and the first model is an AI model; and send configuration limitation information of the first model to the first network device, where the configuration limitation information indicates a network device that is allowed to be configured with the first model.

In a possible implementation method, the processing unit 510 is configured to determine the configuration limitation information.

In a possible implementation method, the request message further includes first indication information, and the first indication information indicates that the first model has a use range. Determining the configuration limitation information includes: determining the configuration limitation information based on the first indication information.

In a possible implementation method, the processing unit 510 is further configured to generate model identification information of the first model for the first model, where the model identification information identifies the first model.

In a possible implementation method, the transceiver unit 520 is further configured to send the model identification information to the first network device.

In a possible implementation method, the model identification information includes identifier information of the first model and/or identifier information of a model function of the first model.

In a possible implementation method, the transceiver unit 520 is further configured to send model information of the first model to a second network device, where the model information includes the model identification information and model management information of the first model.

In a possible implementation method, the request message includes the model management information.

In a possible implementation method, the model management information includes model running information of the first model and/or model feature information of the first model.

In a possible implementation method, the transceiver unit 520 is further configured to send the configuration limitation information to the second network device.

In a possible implementation method, the configuration limitation information includes information about at least one network device and/or identifier information of at least one area, the at least one network device is allowed to be configured with the first model, and a network device corresponding to the at least one area is allowed to be configured with the first model.

When the communication apparatus 500 is configured to implement a function of the terminal device in the foregoing embodiments, the processing unit 510 is configured to access a first network device. The transceiver unit 520 is configured to receive model information and configuration limitation information of a first model from the first network device, where the configuration limitation information indicates a network device that is allowed to be configured with the first model, and the first model is an AI model.

In a possible implementation method, the transceiver unit 520 is further configured to: receive a handover command message from the first network device, where the handover command message includes identifier information of a second network device; and when the network device indicated by the configuration limitation information includes the second network device, send a handover complete message to the second network device, where the handover complete message includes indication information. The indication information indicates that the terminal device has been configured with the first model and/or indicates a status of the first model, and the status is an activated state or a deactivated state; or the indication information indicates that the terminal device is not configured with the first model.

In a possible implementation method, the handover complete message further includes the model information.

In a possible implementation method, the processing unit 510 is further configured to reselect a cell, where the reselected cell belongs to a second network device, and the network device indicated by the configuration limitation information includes the second network device. The transceiver unit 520 is further configured to send indication information to the second network device, where the indication information indicates that the terminal device has been configured with the first model and/or indicates a status of the first model, and the status is an activated state or a deactivated state; or the indication information indicates that the terminal device is not configured with the first model.

In a possible implementation method, the processing unit 510 is further configured to determine that the network device indicated by the configuration limitation information includes the second network device.

In a possible implementation method, the processing unit 510 is further configured to reselect the cell based on the configuration limitation information.

In a possible implementation method, the model information includes model identification information and model management information, where the model identification information includes identifier information of the first model and/or identifier information of a model function of the first model, and the model management information includes model running information of the first model and/or model feature information of the first model.

In a possible implementation method, the configuration limitation information includes information about at least one network device and/or identifier information of at least one area, the at least one network device is allowed to be configured with the first model, and a network device corresponding to the at least one area is allowed to be configured with the first model.

For more detailed descriptions about the processing unit 510 and the transceiver unit 520, directly refer to related descriptions in the foregoing method embodiments. Details are not described herein again.

A communication apparatus 600 shown in FIG. 6 includes a processor 610 and an interface circuit 620. The processor 610 and the interface circuit 620 are coupled to each other. It may be understood that the interface circuit 620 may be a transceiver or an input/output interface. For example, the communication apparatus 600 may further include a memory 630, configured to: store instructions executed by the processor 610, store input data needed by the processor 610 to run the instructions, or store data generated after the processor 610 runs the instructions.

When the communication apparatus 600 is configured to implement the foregoing method embodiments, the processor 610 is configured to implement a function of the processing unit 510, and the interface circuit 620 is configured to implement a function of the transceiver unit 520.

When the communication apparatus is a chip used in a terminal device, the chip of the terminal device implements a function of the terminal device in the foregoing method embodiments. The chip of the terminal device receives information from another module (for example, a radio frequency module or an antenna) of the terminal device, where the information is sent by a network device to the terminal device. Alternatively, the chip of the terminal device sends information to another module (for example, a radio frequency module or an antenna) of the terminal device, where the information is sent by the terminal device to a network device.

When the communication apparatus is a module used in a network device, the module of the network device implements a function of the network device in the foregoing method embodiments. The module of the network device receives information from another module (for example, a radio frequency module or an antenna) of the network device, where the information is sent by a terminal device to the network device. Alternatively, the module of the network device sends information to another module (for example, a radio frequency module or an antenna) of the network device, where the information is sent by the network device to a terminal device. The module of the network device herein may be a baseband chip of the network device, or may be a DU or another module. The DU herein may be a DU in an open radio access network (open radio access network, O-RAN) architecture.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented by hardware, or may be implemented by executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or a storage medium in any other form well known in the art. For example, a storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in a network device or a terminal device. Certainly, the processor and the storage medium may alternatively exist in the network device or the terminal device as discrete components.

All or some of the foregoing embodiments may be implemented by using software, hardware, firmware, or any combination thereof. When software is used for implementation, all or some of embodiments may be implemented in a form of a computer program product. The computer program product includes one or more computer programs or instructions. The computer program (Computer Program) refers to a group of instructions that indicate each step of an electronic computer or another device having a message processing capability, and is usually written in a programming language, and is run on a target architecture. When the computer programs or the instructions are loaded and executed on a computer, all or some of the procedures or functions according to embodiments of this application are performed. The computer may be a general-purpose computer, a dedicated computer, a computer network, a network device, a terminal device, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

The protocol in this application may be a communication protocol or a specification, for example, a 3GPP communication protocol.

In embodiments of this application, unless otherwise specified or logically conflicted, terms and/or descriptions in different embodiments are consistent and may be mutually referenced, and technical features in different embodiments may be combined based on an internal logical relationship thereof, to form a new embodiment.

It may be understood that, in embodiments of this application, the terminal device, the network device, or the model management network element may perform some or all of the steps in embodiments of this application, and these steps or operations are merely examples. In embodiments of this application, another operation or variants of various operations may further be performed. In addition, the steps may be performed in an order different from an order presented in embodiments of this application, and it is possible that not all the operations in embodiments of this application are performed.

In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" generally indicates an "or" relationship between the associated objects. In the formula in this application, the character "/" indicates a "division" relationship between the associated objects.

It may be understood that various numbers in embodiments of this application are merely used for distinguishing for ease of description, and are not used to limit the scope of embodiments of this application. Sequence numbers of the foregoing processes do not mean an execution sequence, and the execution sequence of the processes should be determined based on functions and internal logic of the processes.

**Claims**

1.  A communication method, applied to a first network device, wherein the method comprises:

sending a request message to a model management network element, wherein the request message is used for requesting to register a first model with the model management network element, and the first model is an artificial intelligence AI model; and

receiving configuration limitation information of the first model from the model management network element, wherein the configuration limitation information indicates a network device that is allowed to be configured with the first model.

2. The method according to claim 1, wherein the method further comprises:
receiving model identification information of the first model from the model management network element, wherein the model identification information identifies the first model.

3. The method according to claim 2, wherein the method further comprises:
sending model information of the first model to a terminal device, wherein the model information comprises the model identification information and model management information of the first model.

4. The method according to claim 3, wherein the request message comprises the model management information.

5. The method according to claim 3 or 4, wherein the model management information comprises model running information of the first model and/or model feature information of the first model.

6. The method according to any one of claims 2 to 5, wherein the model identification information comprises identifier information of the first model and/or identifier information of a model function of the first model.

7. The method according to any one of claims 1 to 6, wherein the method further comprises:
sending the configuration limitation information to the terminal device.

8. The method according to any one of claims 1 to 7, wherein the request message further comprises first indication information, and the first indication information indicates that the first model has a use range.

9. The method according to claim 8, wherein the first indication information indicates that a network device that is from a same manufacturer as the first network device is allowed to be configured with the first model; or
the first indication information indicates that a network device that corresponds to a same network identifier as the first network device is allowed to be configured with the first model.

10. The method according to any one of claims 1 to 9, wherein the method further comprises:

sending a handover request message to the second network device, wherein
when the network device indicated by the configuration limitation information comprises the second network device and the first model is not deployed on the second network device, the handover request message comprises the model information of the first model, and the model information comprises the model management information of the first model and the model identification information of the first model.

11. The method according to claim 10, wherein the handover request message further comprises second indication information, wherein the second indication information indicates that the terminal device has been configured with the first model and/or indicates a status of the first model, and the status is an activated state or a deactivated state; or the second indication information indicates that the terminal device is not configured with the first model.

12. The method according to claim 10 or 11, wherein before sending the handover request message to the second network device, the method further comprises:
determining that the second network device is not configured with the first model.

13. The method according to any one of claims 10 to 12, wherein the method further comprises:

receiving a handover response message from the second network device, wherein the handover response message comprises third indication information, the third indication information indicates a status that is after the terminal device is handed over to the second network device and that is of the first model that has been configured for the terminal device, and the status is an activated state or a deactivated state; and
sending a handover command message to the terminal device, wherein the handover command message comprises the third indication information.

14. The method according to any one of claims 1 to 13, wherein the configuration limitation information comprises information about at least one network device and/or identifier information of at least one area, the at least one network device is allowed to be configured with the first model, and a network device corresponding to the at least one area is allowed to be configured with the first model.

15. A communication method, applied to a model management network element, wherein the method comprises:

receiving a request message from a first network device, wherein the request message is used for requesting to register a first model with the model management network element, and the first model is an artificial intelligence AI model; and
sending configuration limitation information of the first model to the first network device, wherein the configuration limitation information indicates a network device that is allowed to be configured with the first model.

16. The method according to claim 15, wherein the method further comprises:
determining the configuration limitation information.

17. The method according to claim 16, wherein the request message further comprises first indication information, and the first indication information indicates that the first model has a use range; and
determining the configuration limitation information comprises:
determining the configuration limitation information based on the first indication information.

18. The method according to any one of claims 15 to 17, wherein the method further comprises:
generating model identification information of the first model for the first model, wherein the model identification information identifies the first model.

19. The method according to claim 18, wherein the method further comprises:
sending the model identification information to the first network device.

20. The method according to claim 18 or 19, wherein the method further comprises:
sending model information of the first model to a second network device, wherein the model information comprises the model identification information and model management information of the first model.

21. The method according to claim 20, wherein the request message comprises the model management information.

22. The method according to claim 20 or 21, wherein the method further comprises:
sending the configuration limitation information to the second network device.

23. A communication method, applied to a terminal device, wherein the method comprises:

accessing a first network device; and
receiving model information and configuration limitation information of a first model from the first network device, wherein the configuration limitation information indicates a network device that is allowed to be configured with the first model, and the first model is an artificial intelligence AI model.

24. The method according to claim 23, wherein the method further comprises:

receiving a handover command message from the first network device, wherein the handover command message comprises identifier information of a second network device; and
when the network device indicated by the configuration limitation information comprises the second network device, sending a handover complete message to the second network device, wherein the handover complete message comprises indication information, wherein
the indication information indicates that the terminal device has been configured with the first model and/or indicates a status of the first model, and the status is an activated state or a deactivated state; or the indication information indicates that the terminal device is not configured with the first model.

25. The method according to claim 24, wherein the handover complete message further comprises the model information.

**26.** The method according to claim 23, wherein the method further comprises:

reselecting a cell, wherein the reselected cell belongs to a second network device, and the network device indicated by the configuration limitation information comprises the second network device; and
sending indication information to the second network device, wherein the indication information indicates that the terminal device has been configured with the first model and/or indicates a status of the first model, and the status is an activated state or a deactivated state; or the indication information indicates that the terminal device is not configured with the first model.

**27.** The method according to claim 26, wherein the method further comprises:
determining that the network device indicated by the configuration limitation information comprises the second network device.

**28.** The method according to claim 26, wherein reselecting the cell comprises:
reselecting the cell based on the configuration limitation information.

**29.** A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 14, the method according to any one of claims 15 to 22, or the method according to any one of claims 23 to 28 through a logic circuit or by executing code instructions.

**30.** A communication apparatus, comprising a unit configured to implement the method according to any one of claims 1 to 14, or configured to implement the method according to any one of claims 15 to 22, or configured to implement the method according to any one of claims 23 to 28.

**31.** A computer-readable storage medium, wherein the storage medium stores a computer program or instructions; and when the computer program or the instructions are executed by a communication apparatus, the method according to any one of claims 1 to 14 is implemented, or the method according to any one of claims 15 to 22 is implemented, or the method according to any one of claims 23 to 28 is implemented.

**32.** A communication system, comprising a first network device configured to implement the method according to any one of claims 1 to 14 and a model management network element configured to implement the method according to any one of claims 15 to 22.

FIG. 1(a)

FIG. 1(b)

FIG. 1(c)

Neuron

$$y = f\left(\sum_{i=0}^{n} w_i x_i + b\right)$$

FIG. 2(a)

FIG. 2(b)

| Terminal device | First network device | Model management network element | Second network device |
|---|---|---|---|

301: Request message

302: Determine configuration limitation information of a first model

303: Configuration limitation information

303a: Model information and/or configuration limitation information

304: Model information

305: Deploy the first model based on the model information of the first model

306: Handover request message

307: Handover response message

308: Handover command message

309: Handover complete message

FIG. 3

| Terminal device | First network device | Second network device |
|---|---|---|

401: Release the terminal device into a non-connected state

402: Perform cell reselection

403: Indication information

**FIG. 4**

Communication apparatus 500

Processing unit 510

Transceiver unit 520

**FIG. 5**

Communication apparatus 600

Processor 610

Interface circuit 620

Memory 630

**FIG. 6**

## INTERNATIONAL SEARCH REPORT

| International application No. |
| --- |
| **PCT/CN2023/135606** |

**A.     CLASSIFICATION OF SUBJECT MATTER**

H04L41/16(2022.01)i

According to International Patent Classification (IPC) or to both national classification and IPC

**B.     FIELDS SEARCHED**

Minimum documentation searched (classification system followed by classification symbols)

IPC： H04W H04L

Documentation searched other than minimum documentation to the extent that such documents are included in the fields searched

Electronic data base consulted during the international search (name of data base and, where practicable, search terms used)

CNTXT, ENTXT, DWPI, 3GPP, CNKI: 人工智能, 模型, 注册, 配置, 限制, 允许, 支持, 设备, 网元, 范围, AI, model, regist+, config+, restrict+, allow+, support, device, network element, range, region

**C.     DOCUMENTS CONSIDERED TO BE RELEVANT**

| Category* | Citation of document, with indication, where appropriate, of the relevant passages | Relevant to claim No. |
| --- | --- | --- |
| Y | CN 114143799 A (HUAWEI TECHNOLOGIES CO., LTD.) 04 March 2022 (2022-03-04) description, paragraphs 150, 156, and 167 | 1-32 |
| Y | CN 115150287 A (HUAWEI TECHNOLOGIES CO., LTD.) 04 October 2022 (2022-10-04) description, paragraphs 77-78 | 1-32 |
| A | CN 115699842 A (GUANGDONG OPPO MOBILE COMMUNICATIONS CO., LTD.) 03 February 2023 (2023-02-03) entire document | 1-32 |
| A | WO 2022165721 A1 (HUAWEI TECHNOLOGIES CO., LTD.) 11 August 2022 (2022-08-11) entire document | 1-32 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **30 January 2024** | **06 February 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/135606**

| Patent document cited in search report | | | Publication date (day/month/year) | Patent family member(s) | | | Publication date (day/month/year) |
|---|---|---|---|---|---|---|---|
| CN | 114143799 | A | 04 March 2022 | None | | | |
| CN | 115150287 | A | 04 October 2022 | WO | 2022206358 | A1 | 06 October 2022 |
| CN | 115699842 | A | 03 February 2023 | WO | 2022021421 | A1 | 03 February 2022 |
| WO | 2022165721 | A1 | 11 August 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310138276